# EUROPÄISCHE PATENTSCHRIFT

(11) **EP 2 338 813 B1**
(45) Veröffentlichungstag und Bekanntmachung des Hinweises auf die Patenterteilung: **18.01.2012**
(21) Anmeldenummer: 10188369.2
(22) Anmeldetag: 21.10.2010
(51) Int. Cl.: B65G 29/00, B65G 47/84

(54) **Behältertransporteur**
Container transporter
Transporteur de récipients

(30) Priorität: 23.12.2009 DE 102009055301
(43) Veröffentlichungstag der Anmeldung: 29.06.2011
(73) Patentinhaber: Krones AG, 93073 Neutraubling (DE)
(72) Erfinder: Voth, Klaus, 93083, Obertraubling (DE)
(74) Vertreter: Grünecker, Kinkeldey, Stockmair & Schwanhäusser

(56) Entgegenhaltungen:
- EP-A1- 1 647 518
- EP-A2- 1 751 008

## Beschreibung

Die Erfindung betrifft einen Behältertransporteur der im Oberbegriff des Patentanspruchs 1 angegebenen Art.

Bei einem gattungsgemäßen Behältertransporteur gemäß DE 10 2008 010 895 A ist ein topfförmiges Motorgehäuse mit einem im Wesentlichen dem Durchmesser des Grundkörpers der zylindrischen Säule entsprechenden Durchmesser auf dem oberen Ende der Säule abgedichtet montiert. Im Motorgehäuse ist der hohlzylindrische Stator des Innenläufer-Elektromotors, beispielsweise durch Einpressen, fixiert. Im Stator sitzt der zylindrische Rotor auf einer Welle, von der ein Wellenstummel frei auskragend aus dem Motorgehäuse nach oben vorsteht und das Sternrad trägt. Das Motorgehäuse hat zwei Lagerschilde, in denen Lager (Loslager und Festlager) die Rotorwelle lagern und die axiale Last des Sternrades abstützen und zentrieren. Eine Motorsteuerung ist in einem separaten abgedichteten Abteil des Motorgehäuses untergebracht, in welches aus der Säule Anschlusskabel führen. Das den Stator und den Rotor enthaltende Motorgehäuses ist unter Überdruck setzbar. Im Durchdringbereich des Wellenstummels ist in einer Deckplatte des Motorgehäuses eine Drehabdichtung angeordnet. Ein Austausch des Elektromotors, von Komponenten davon, oder des Sternrades, gestaltet sich aufwändig, vor allem weil der Zugang beschränkt ist und an vielen Befestigungselementen und Strukturkomponenten manipuliert werden muss. Die exponiert positionierte Drehabdichtung ist leckageanfällig. Die Säule und das Motorgehäuse sind komplizierte Bauteile und montagetechnisch aufwändig. Da erstrebenswert ist, den Außendurchmesser des Grundkörpers der Säule so klein wie möglich zu wählen, wirkt die magnetische Drehkraft zwischen dem Stator und dem Innenläufer-Rotor auf einem relativ kleinen Durchmesser, was die Drehmomentausbeute des Elektromotors unzweckmäßig beschränkt.

Aus EP 1 751 008 A ist es bekannt, mehrere Elemente zum Manipulieren mehrerer Behälter jeweils in Form eines Drehtellers für einen Behälter an einem konventionell drehangetriebenen oder linear angetriebenen Fördertisch zu lagern und jeden Drehteller zur Drehausrichtung des Behälters um die Drehtellerachse hin- und herzuverdrehen. Als Antriebseinheit jedes Drehtellers ist ein zum Drehausrichten in der einen oder der anderen Drehrichtung nur zyklisch angetriebener Außenläufer-Motor vorgesehen. Dessen Rotor ist als Gehäuse ausgebildet, das gleichzeitig den Drehteller bilden kann, und unter Umgehung des Stators mit einem separaten Drehlager auf dem Fördertisch drehbar abgestützt wird. Der Stator enthält Wicklungen und ist auf dem Fördertisch fixiert.

Ein in WO 2008/145363 A nur schematisch offenbarter Transportstern, auch zur Verwendung im Nassbereich einer Reinigungsmaschine, weist zwischen der Säule und dem Sternrad einen Elektromotor-Direktantrieb auf. Ein Motorgehäuse bildet gleichzeitig das Antriebsgehäuse. Der Elektromotor ist ein Reluktanzmotor oder nutenloser Synchronmotor, dessen scheibenförmiger Rotor axial oberhalb des scheibenförmigen Stators platziert ist und diesen teilweise abdeckt. Im Stator sind Magnetspulen an einem flachen Eisenring angeordnet, der von dem kreisscheibenförmigen Rotor mit weichmagnetischen Eisenbohlen durch einen Luftspalt getrennt ist, so dass eine reibungslose Relativverdrehung möglich sein soll.

Weiterer Stand der Technik ist zu finden in EP 1 647 518 A.

Der Erfindung liegt die Aufgabe zugrunde, einen Behältertransporteur der eingangs genannten Art dahingehend zu verbessern, dass dieser trotz hoher Leistungsfähigkeit baulich einfach ist und einen schnell und bequem demontierbaren Antriebsbereich aufweist. Teil der Aufgabe ist es, den Behältertransporteur so zu gestalten, dass dieser in einem sogar bezüglich der Sepsis kritischen Nassbereich problemlos einsetzbar ist, und selbst dann zum raschen Austausch des Antriebsmotors oder dessen Komponenten gute Zugänglichkeit gegeben ist.

Die gestellte Aufgabe wird mit den Merkmalen des Patentanspruchs 1 gelöst.

Unter anderem wegen der Bauweise des Außenläufer-Motors lässt sich die lösbare Verbindung des Stators mit der Säule baulich einfach und vor allem gut zugänglich gestalten, so dass ein Austausch bequem und rasch (kurze Ausfallzeit des Behältertransporteurs) durchführbar ist. Die Anbringung des Sternrades an dem Rotor erfolgt auf einem die Stabilität der Sternradabstützung erhöhenden, optimal großen Außendurchmesser. Die Drehmomentausbeute des Außenläufer-Motors ist für eine gegebene Baugröße höher als bei einem Innenläufer-Motor, weil die Magnetschubkraft zwischen dem Stator und dem Außenläufer-Rotor auf größerem Durchmesser wirkt. Dies ermöglicht eine sehr kompakte Baugröße des Außenläufer-Motors und somit auch eine wünschenswert schlanke Säule. Ferner erlaubt die Bauweise des Außenläufer-Motors bequem eine flüssigkeitsdichte Kapselung, so dass der Behältertransporteur selbst in Nassbereichen, z.B. von Reinigungsmaschinen, und sogar dann einsetzbar ist, wenn im Nassbereich kritische Anforderungen bezüglich der Sepsis zu erfüllen sind.

Bei einer zweckmäßigen Ausführungsform ist der Außenläufer-Motor als Direktantriebseinheit, vorzugsweise lösbar, entweder zur Gänze baulich in das Sternrad integriert oder an dieses angesetzt. Dies führt zu einer stabilen Abstützung des Sternrades und zu kompakten Abmessungen in Hochrichtung des Behältertransporteurs.

Besonders zweckmäßig wird als der Außenläufer-Motor ein Torque-Motor eingesetzt, vorzugsweise sogar ein flüssigkeitsdicht gekapselter Torque-Motor. Solche Torque-Motoren sind in verschiedensten Spezifikationen und Baugrößen handelsüblich und kostengünstig erhältlich, und zeichnen sich durch hohe Drehmomentausbeute, eine flüssigkeitsdichte Kapselung, falls erforderlich, und sehr präzise Steuerbarkeit aus. Ferner haben Torque-Motoren ein großes Haltemoment, lassen sie sich mit einem weichen Lauf ohne spürbares Rastmoment betreiben, und bringen selbst extrem kleine Baugrößen überraschend hohe Leistungen. Es handelt sich in der Regel um einen Synchronmotor mit Permanentmagnet-Erregung, der sich sauber elektronisch regeln lässt und bei extrem kompakter Bauweise ein sehr hohes Drehmoment erzeugt, dabei flüssigkeitsdicht gekapselt und wartungsfrei ist.

Zu Torque-Motoren wird beispielsweise auf ohne weiteres zugängliche Informationen im Internet verwiesen: www.wasserlust24.de/torgeedo elektroaussenborder.htm, oder www.cytecsystems.de.

Bei einer zweckmäßigen Ausführungsform weist die Säule an einem hohlen Grundkörper einen oberseitig vorstehenden Wellenstummel auf, auf dem der Stator direkt oder mittels wenigstens eines mechanisch oder hydraulisch betätigbaren Spannsatzes fixiert ist. Solche mechanisch oder hydraulisch betätigbaren Spannsätze sind bekannt und handelsüblich. Ihr Spannsitz wird durch Schrauben oder hydraulisch eingestellt bzw. gelöst, wobei sie günstige Befestigungsmöglichkeiten für den Stator bieten und auf dem Wellenstummel platzsparend anbringbar sind. Nach Lösen des Spannsatzes lässt sich der Außenläufer-Motor mit dem Sternrad bequem vom Wellenstummel abnehmen, wobei zum Lösen und späteren Festsetzen des Spannsatzes jeweils guter Zugang gewährleistet ist.

Bei einer zweckmäßigen Ausführungsform werden Versorgungs- und/oder Steuerleitungen durch den Wellenstummel in den Stator des Außenläufer-Motors geführt, die damit selbst bei Einsatz des Behältertransporteurs im Nassbereich gegen äußere Einflüsse geschützt sind.

Besonders zweckmäßig wird im Außenläufer-Motor, vorzugsweise im Stator, eine Motorsteuerung untergebracht, zu der, vorzugsweise, ein Stromversorgungskabel und wenigstens ein Signalkabel durch den Wellestummel verlegt sind. Beim Abnehmen des Außenläufer-Motors mit dem Sternrad können die Kabel entweder mitherausgezogen, oder an einfachen Steckverbindungen gelöst werden.

Bei einer einfachen Ausführungsform ist der Stator hohlzylindrisch au sgebildet und außen auf den Wellenstummel direkt aufgesteckt und daran fixiert, vorzugsweise mit einer Passung, Pressung und/oder mit Dreh- und/oder Axialbefestigungselementen.

Bei einer anderen Ausführungsform ist der allgemein ringförmige Spannsatz auf dem Wellenstummel lösbar fixiert, und wird der Stator von dem Spannsatz getragen. Nach Lösen des Spannsatzes (mechanisch lösbar oder hydraulisch lösbar) lässt sich der Außenläufer-Motor, gegebenenfalls zusammen mit dem Sternrad und den darauf angebrachten Elementen, bequem abnehmen.

Um gegebenenfalls nur das Sternrad abnehmen zu können, bzw. einen Austausch des Außenläufer-Motors rasch und bequem durchführen zu können, kann es zweckmäßig sein, das Sternrad auf dem Rotor form- und/oder kraftschlüssig, vorzugsweise lösbar, festzulegen. Hierbei können Verschraubungen eingesetzt werden, oder, ähnlich wie beim Stator, zumindest ein mechanisch oder hydraulisch betätigbarer Spannsatz.

Um gegebenenfalls im oberen Bereich das Eindringen von Flüssigkeiten zu verhindern, kann es zweckmäßig sein, wenn der Rotor einen zentralen Verschlussdeckel aufweist, der bei Bedarf entnehmbar ist.

Schließlich ist es zweckmäßig, wenn der Außendurchmesser des Außenläufer-Motors größer ist als der Außendurchmesser des Grundkörpers der Säule des Behältertransporteurs. Dies ermöglicht eine sehr schlanke Bauweise der Säule, was im Hinblick auf Bauraum und Reinigung als zweckmäßig anzusehen ist (die Säule kann sogar reinigungstechnisch günstig torpedoförmig gestaltet sein).

Im Kern besteht die Erfindung darin, in Abkehr vom üblichen Antriebskonzept von solchen Behältertransporteuren oder Transportsternen mit einem Innenläufer-Elektromotor und einem das Sternrad tragenden Wellenstummel des Rotors einen Außenläufer-Motor, insbesondere einen Torque-Motor, so einzugliedern, dass sich ein Austausch schnell und mit guter Zugänglichkeit bequem durchführen lässt, wobei die Bauweise des Außenläufer-Motors dessen vollständige flüssigkeitsdichte Kapselung ermöglicht, so dass der Behältertransporteur auch in einem Nassbereich eingesetzt werden kann.

Anhand der Zeichnungen werden Ausführungsformen des Erfindungsgegenstandes erläutert. Es zeigen:
- Fig. 1: eine Schemaschnittdarstellung eines Behältertransporteurs in betriebsbereitem Zustand,
- Fig. 2: einen Teilachsschnitt einer weiteren Ausführungsform, und
- Fig. 3: einen Teilachsschnitt einer weiteren Ausführungsform.

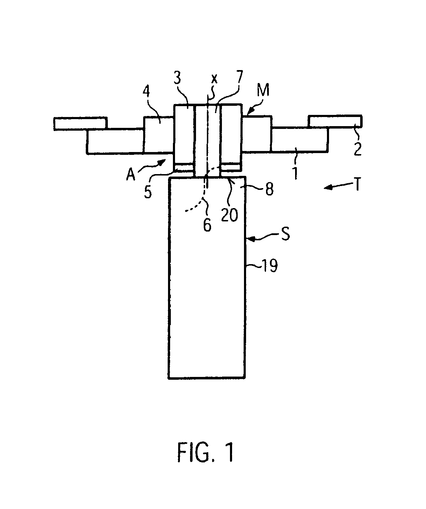

Fig. 1 zeigt in einem schematischen Teilachsschnitt einen Behältertransporteur T, wie er in Behälter-Behandlungsmaschinen zum Einsatz kommt, um mehrere Behälter (nicht gezeigt) gleichzeitig zu transportieren und zu positionieren. Ein nicht beschränkendes Beispiel einer solchen Behälter-Behandlungsmaschine ist eine Flaschen-Reinigungsmaschine, in der der Behältertransporteur T in einem Nassbereich eingesetzt wird, in dem gegebenenfalls kritische Arbeitsbedingungen in Bezug auf Sepsis herrschen, und der Behältertransporteur intensiven Reinigungszyklen unterworfen werden muss.

Der Behältertransporteur T besitzt eine Säule S, die entweder direkt oder mit wenigstens einem Standfuß auf dem Boden steht oder in einem nicht gezeigten Tragrahmen im Abstand oberhalb des Bodens fixiert ist. Die Säule S hat einen beispielsweise torpedoförmigen oder allgemein zylindrischen Grundkörper 19 mit einer ebenen Oberseite 20, von der beispielsweise zentral ein Wellenstummel 7 nach oben vorsteht, der eine Drehachse X des Behältertransporteurs T definieren kann. Der Außendurchmesser des Wellenstummels 7 beträgt nur einen Bruchteil des Außendurchmessers des Grundkörpers 19.

Der Behältertransporteur T weist ein Sternrad 1 auf, auf dem außenseitig in Umfangsrichtung verteilt Elemente 2 zum Manipulieren von Behältern montiert sind (Transportebene). Die Elemente 2 können beispielsweise Zangen, Greifer, Drehteller oder dgl. sein, und werden mit dem Sternrad 1 um die Achse X drehangetrieben. Der Behältertransporteur T weist eine Antriebseinheit A mit einem Elektromotor in Form eines Außenläufer-Motors M auf. Die Antriebseinheit A überträgt die Drehbewegung auf das Sternrad 1 und stützt dieses an der Säule S ab. Der Außenläufer-Motor M weist in der gezeigten Ausführungsform einen hohlzylindrischen Stator 3 auf, der auf den Wellenstummel 7 aufgesteckt und daran lösbar fixiert ist. Den Stator 3 umgibt ein Außenläufer-Rotor 4 in hohlzylindrischer Ausbildung, gegebenenfalls mit größerer radialer Stärke als die radiale Stärke des Stators 3. Das Sternrad 1 ist an dem Rotor 4 befestigt, vorzugsweise ebenfalls lösbar. Der Außenläufer-Motor M ist, zweckmäßig, vollgekapselt und damit flüssigkeitsdicht und lässt sich mit bequemem Zugang beispielsweise von der Unterseite des Sternrades 1 von dem Wellenstummel 7 abnehmen. In den Stator 3 kann eine Motorsteuerung 5 integriert sein. Wenigstens ein Anschlusskabel 6 (ein Kabel für das Antriebsgeschwindigkeitssignal und/oder ein Stromversorgungskabel und/oder ein Signalkabel) kann vom Inneren des Grundkörpers 19 der Säule S durch den Wellenstummel zur Motorsteuerung 5 bzw. in den Stator 3 verlegt sein.

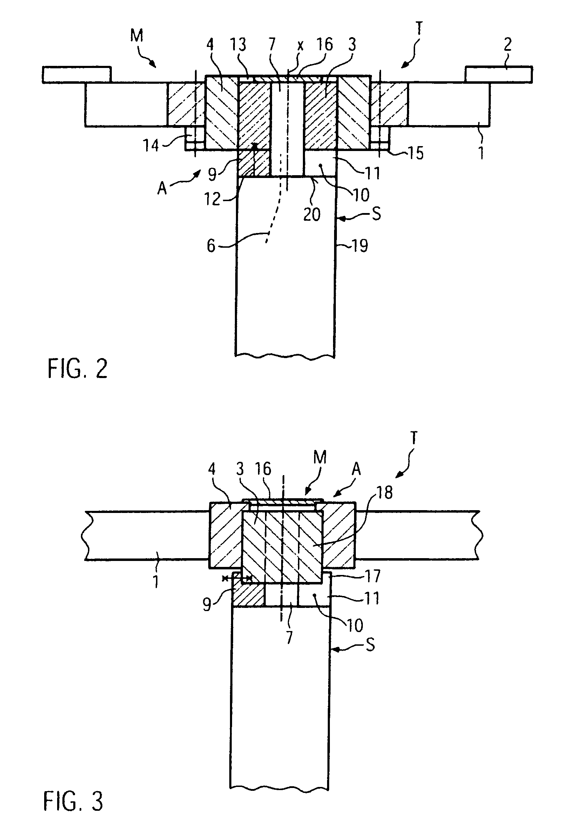

In der Ausführungsform des Behältertransporteurs T in Fig. 2 erstreckt sich der Wellenstummel 7 am Grundkörper 19 der Säule S bis zum oberen Ende des hohlzylindrisch ausgebildeten Stators 3 des Außenläufer-Motors M. Der Stator 3 ist, beispielsweise mit einer Gleitpassung, auf den Wellenstummel 7 aufgesteckt und wird mit einem Spannsatz 9 fixiert. Der Spannsatz 9 hat allgemein die Form eines Kreisringes und kann mit Spannschrauben 10 im Bereich wenigstens eines Radialschlitzes 11 auf dem Wellenstummel 7 festgeklemmt werden. Gegebenenfalls besitzt der Spannsatz 9 Hydraulikelemente, die ein bequemes Lösen ermöglichen, oder sind zum Lösen die Spannschrauben zu benutzen. Der Spannsatz 9 kann sich auf der Oberseite 20 des Grundkörpers 19 abstützen, könnte aber auch in jeder beliebigen Höhenlage nur an dem Wellenstummel 7 festgeklemmt werden. Der Stator 3 ist beispielsweise mit Befestigungselementen 12, vorzugsweise von unten her, am Spannsatz 9 lösbar festgelegt. Der Rotor 4, der den Stator 3 außen umgibt, gegenüber diesem drehbar ist und abgekapselt sein kann, weist beispielsweise einen einwärts vorspringenden Ringflansch 13 auf, der eine Öffnung begrenzt, in der ein Verschlussdeckel 16 herausnehmbar platziert sein kann. Das Sternrad 1 ist beispielsweise am Außenumfang des Rotors 4 festgelegt, beispielsweise auf einem unterseitigen Ringflansch 14 und mit Befestigungselementen 15, die von unten her eingeschraubt sein können. Alternativ (nicht gezeigt) könnte die Verbindung zwischen dem Sternrad 1 und dem Rotor 4 auch mit wenigstens einem Spannsatz ähnlich dem Spannsatz 9 bewerkstelligt werden.

Zur Manipulation zum Vorbereiten der Abnahme des Sternrades 1 zusammen mit dem Außenläufer-Motor M ist an der Unterseite des Sternrades freier Zugang gegeben. Alternativ könnte der Spannsatz 9 an der Oberseite des Stators 3 platziert sein, damit zum Abnehmen des Sternrades 1 mit dem Außenläufer-Motor M von oben angegriffen werden kann. Verbindungskabel 6 können vom Grundkörper 19 durch den Wellenstummel 7 in den Stator 3, gegebenenfalls zur dort angeordneten Motorsteuerung (nicht gezeigt) verlegt sein.

In der Ausführungsform in Fig. 3 weist der Spannsatz 9 (ähnlich wie in Fig. 2) zum Fixieren des Stators 3 z.B. eine Ringfassung 17 auf. Der Stator 3 braucht bei dieser Ausführungsform nicht notwendigerweise hohlzylindrisch zu sein. Auch der Wellenstummel 7 braucht nur in etwa so hoch überzustehen, wie es zum Fixieren des Spannsatzes 9 erforderlich ist. Dies soll aber nicht ausschließen, einen hohlzylindrischen Stator 3 vorzusehen, und den Wellenstummel 7 auch, gegebenenfalls zum zusätzlichen Zentrieren des Stators 3, weiter nach oben vorstehen zu lassen, als gezeigt (gestrichelt bei 18 angedeutete).

Die Befestigung des Sternrades 1 am Rotor 4, dessen Zentrum durch den Verschlussdeckel 16 verschlossen sein kann, ist in Fig. 3 nicht näher hervorgehoben. Das Sternrad 1 könnte beispielsweise aufgepreßt oder auf beliebige Weise am Rotor 4 fixiert sein.

Bei weiteren Alternativen ist das Sternrad 1 entweder auf der Oberseite oder der Unterseite des Rotors 4 fixiert, d.h., der Außenläufer-Motor M ist entweder direkt in das Sternrad baulich integriert, oder an dieses angesetzt. Der Außendurchmesser des Grundkörpers 19 der Säule S kann geringer sein als der Außendurchmesser des Außenläufer-Motors M. Falls ausreichend stabil, kann die Säule S sogar durchgehend nur mit dem Durchmesser des Wellenstummels 7 ausgebildet werden, beispielsweise falls die Säule S in einem stabilen Tragrahmen fixiert ist, der sich unterhalb der Transportebene der Elemente 2 erstreckt, gegebenenfalls mit freien Feldern um die Säule S zwecks guten Zugangs und einfacher Reinigung.

## Patentansprüche

1. Behältertransporteur (T), insbesondere für Behälter-Behandlungsmaschinen, wie Flaschen, Reinigungsmaschinen, mit einem zentral drehangetriebenem, außenliegende Elemente (2) zum Manipulieren mehrerer Behälter aufweisenden Sternrad (1), mit einer stationären Säule (S) und einem als Antriebseinheit (A) des Sternrades (1) angeordneten, einen Stator (3) und einen Rotor (4) aufweisender Elektromotor (M), dessen Stator (3) relativ zur Säule (S) abgestützt ist, **dadurch gekennzeichnet, dass** der Elektromotor (M) ein Außenläufer-Motor ist, dessen Stator (3) an der Säule (S) lösbar angebracht ist, und dessen Rotor (4) das mit den Elementen (2) bestückte Sternrad (1) trägt und über den Stator (3) an der Säule (S) abstützt.

2. Behältertransporteur nach Anspruch 1, **dadurch gekennzeichnet, dass** der Außenläufer-Motor als Direktantrieb, vorzugsweise lösbar, entweder baulich in das Sternrad (1) integriert oder an dieses angesetzt ist.

3. Behältertransporteur nach Anspruch 1 oder 2, **dadurch gekennzeichnet, dass** der Außenläufer-Motor ein Torque-Motor, vorzugsweise ein flüssigkeitsdicht gekapselter Torque-Motor ist.

4. Behältertransporteur nach wenigstens einem der vorhergehenden Ansprüche, **dadurch gekennzeichnet, dass** die Säule (S) an einem hohlen Grundkörper (19) einen oberseitig vorstehenden Wellenstummel (7) aufweist, auf dem der Stator (3) direkt oder mittels wenigstens eines mechanisch oder hydraulisch betätigbaren Spannsatzes (9) fixiert ist.

5. Behältertransporteur nach wenigstens einem der vorhergehenden Ansprüche, **dadurch gekennzeichnet, dass** Versorgungs- und/oder Steuerleitungen (6) durch den Wellenstummel (7) in den Stator (3) geführt sind.

6. Behältertransporteur nach wenigstens einem der vorhergehenden Ansprüche, **dadurch gekennzeichnet, dass** im Außenläufer-Motor, vorzugsweise in dessen Stator (3), eine Motorsteuerung (5) untergebracht ist, und dass, vorzugsweise, durch den Wellenstummel (7), ein Stromversorgungskabel und wenigstens ein Signalkabel (6) zur Motorsteuerung (5) verlegt sind.

7. Behältertransporteur nach Anspruch 4, **dadurch gekennzeichnet, dass** der Stator (3) hohlzylindrisch ausgebildet und außen auf den Wellenstummel (7) aufgesteckt und daran fixiert ist, vorzugsweise mit einer Passung, Pressung und/oder mit Dreh- und/oder Axialbefestigungselementen.

8. Behältertransporteur nach Anspruch 4, **dadurch gekennzeichnet, dass** der allgemein ringförmige Spannsatz (9) auf dem Wellenstummel (7) lösbar fixiert ist und den Stator (3) trägt.

9. Behältertransporteur nach Anspruch 1, **dadurch gekennzeichnet, dass** das Sternrad (1) auf dem Rotor (4) form- und/oder kraftschlüssig, vorzugsweise lösbar, festgelegt ist.

10. Behältertransporteur nach wenigstens einem der vorhergehenden Ansprüche, **dadurch gekennzeichnet, dass** der Rotor (4) oberseitig einen zentralen Verschlussdeckel (16) aufweist.

11. Behältertransporteur nach wenigstens einem der vorhergehenden Ansprüche, **dadurch gekennzeichnet, dass** der Außendurchmesser des Außenläufer-Motors (M) größer ist als der Außendurchmesser des Grundkörpers (19) der Säule (S).

## Claims

1. Container transporter (T), in particular for container treatment machines, like bottles, cleaning machines, comprising a centrally rotatable driven star wheel (1) having at an outer side elements (2) for manipulating several containers, a stationary column (S) and an electric motor (M) including a stator (3) and a rotor (4) as a drive unit (A) of the star wheel (1), the stator (3) of the electric motor (M) being supported in relation to the column (S), **characterised in that** the electric motor (M) is an external rotor motor the stator (3) of which is releasably arranged at the column (S) and the external rotor (4) of which is carrying the element equipped star wheel (1) and is supporting the star wheel (1) via the stator (3) at the column (S).

2. Container transporter according to claim 1, **characterised in that** the external rotor motor is a direct drive and either is structurally integrated into the star wheel (1) or is attached at the star wheel (1), preferably removably.

3. Container transporter according to claim 1 or 2, **characterised in that** the external rotor motor is a torque motor, preferably a liquid-tight encapsulated torque motor.

4. Container transporter according to at least one of the preceding claims, **characterised in that** the column (S) has a hollow base body (19) and a shaft stud (7) protruding from the upper side of the base body (19), on which shaft stud (7) the stator (3) is fixed either directly or by means of at least one mechanically or hydraulically actuable clamping kit (9).

5. Container transporter according to at least one of the preceding claims, **characterised in that** supply lines and/or control lines (6) extend through the shaft stud (7) into stator (3).

6. Container transporter according to at least one of the preceding claims, **characterised in that** a motor control (5) is accommodated in the external rotor motor, preferably in the stator (3), and that, preferably, an electric supply cable and at least one signal cable (6) are installed through the shaft stud (7) into the motor control (5).

7. Container transporter according to claim 4, **characterised in that** the stator (3) formed as a hollow cylinder and is slipped-on and fixed at the shaft stud (7), preferably with a fit, a press-fit and/or with the help of rotary and/or axial fastening elements.

8. Container transporter according to claim 4, **characterised in that** the generally ringshaped clamping kit (9) is releasably fixed on the shaft stud (7) and carries the stator (3).

9. Container transporter according to claim 1, **characterised in that** the star wheel (1) is secured on the external rotor (4) with a form-fit and/or a force-fit, preferably releasably.

10. Container transporter according to at least one of the preceding claims, **characterised in that** the external rotor (4) has a central closing lid (16) at the upper side.

11. Container transporter according to at least one of the preceding claims, **characterised in that** the outer diameter of the external rotor motor (M) is larger than the outer diameter of the base body (19) of the column (S).

## Revendications

1. Transporteur de récipients (T), en particulier pour des machines de traitement de récipients telles que des machines de nettoyage de bouteilles, avec une roue en étoile (1) qui est entraînée en rotation de manière centrale et qui comporte des éléments extérieurs (2) pour manipuler plusieurs récipients, avec une colonne stationnaire (S) et avec un moteur électrique (M) qi est disposé comme unité d'entraînement (A) de la roue en étoile (1), qui comporte un stator (3) et un rotor (4) et dont le stator (3) est supporté par rapport à la colonne (S), **caractérisé en ce que** le moteur électrique (M) est un moteur à rotor extérieur dont le stator (3) est monté sur la colonne (S) de manière amovible et dont le rotor (4) porte la roue en étoile (1) équipée des éléments (2) et supporte ladite roue en étoile (1) au niveau de la colonne (S) par l'intermédiaire du stator (3).

2. Transporteur de récipients selon la revendication 1, **caractérisé en ce que** le moteur à rotor extérieur est intégré comme entraînement direct dans la construction de la roue en étoile (1) ou rapporté sur celui-ci, de préférence de manière amovible.

3. Transporteur de récipients selon la revendication 1 ou 2, **caractérisé en ce que** le moteur à rotor extérieur est un moteur couple, de préférence un moteur couple blindé de manière étanche au liquide.

4. Transporteur de récipients selon l'une au moins des revendications précédentes, **caractérisé en ce que** la colonne (S) présente sur un corps de base creux (19) un bout d'arbre (7) qui dépasse du côté supérieur et sur lequel le stator (3) est fixé directement ou à l'aide d'au moins un ensemble de serrage (9) à commande mécanique et hydraulique.

5. Transporteur de récipients selon l'une au moins des revendications précédentes, **caractérisé en ce que** des lignes d'alimentation et/ou de commande (6) traversent le bout d'arbre (7) jusque dans le stator (3).

6. Transporteur de récipients selon l'une au moins des revendications précédentes, **caractérisé en ce qu'**une commande de moteur (5) est logée dans le moteur à rotor extérieur, de préférence dans le stator (3) de celui-ci, et **en ce que** de préférence un câble d'alimentation électrique et au moins un câble de signaux (6) pour la commande de moteur (5) sont posés dans le bout d'arbre (7).

7. Transporteur de récipients selon la revendication 4, **caractérisé en ce que** le stator (3) a une forme cylindrique creuse et est enfilé à l'extérieur sur le bout d'arbre (7) et est fixé à celui-ci, de préférence avec un ajustement, une pression et/ou des éléments de fixation en rotation et/ou axiale.

8. Transporteur de récipients selon la revendication 4, **caractérisé en ce que** l'ensemble de serrage (9) de manière générale annulaire est fixé de manière amovible sur le bout d'arbre (7) et porte le stator (3).

9. Transporteur de récipients selon la revendication 1, **caractérisé en ce que** la roue en étoile (1) est fixée sur le rotor (4) par complémentarité de forme et/ou par force, de préférence de manière amovible.

10. Transporteur de récipients selon l'une au moins des revendications précédentes, **caractérisé en ce que** le rotor (4) présente sur son côté supérieur un couvercle central (16).

11. Transporteur de récipients selon l'une au moins des revendications précédentes, **caractérisé en ce que** le diamètre extérieur du moteur à rotor extérieur (M) est plus grand que le diamètre extérieur du corps de base (19) de la colonne (S).
